# EUROPÄISCHE PATENTANMELDUNG

(11) **EP 2 105 066 A1**
(43) Veröffentlichungstag der Anmeldung: **30.09.2009**
(21) Anmeldenummer: 09153520.3
(22) Anmeldetag: 24.02.2009
(51) Int. Cl.: A47B 47/04, A47B 95/04, F16B 12/20

(54) **Möbelkorpus**

(30) Priorität: 26.03.2008 DE 202008004147 U
(71) Anmelder: Hettich-Heinze GmbH & Co. KG, 32139 Spenge (DE)
(72) Erfinder: Andschus, Stefan, 32312, Lübbecke (DE); Donck, Thobias, 49080, Osnabrück (DE); Nolte, Frank, 49086, Osnabrück (DE); Poppenborg, Norbert, 32105, Bad Salzuflen (DE); Sobolweski, Uwe, 32257, Bünde (DE)
(74) Vertreter: Dantz, Jan Henning

(57) **Zusammenfassung**

Ein Möbelkorpus weist zwei beabstandet angeordnete Seitenwände (2) auf, an denen eine Rückwand (3) festgelegt ist, wobei die Seitenwände (2) als Leichtbauplatten mit äußeren Deckplatten (4, 5) und einer Zwischenlage (6) ausgebildet sind. Dabei sind in einer inneren Deckplatte (5) jeder Seitenwand (2) Öffnungen (10) vorgesehen, in die jeweils ein sich aufweitendes Klemmelement (11) zum Festlegen der Rückwand (3) eingefügt ist, so dass diese leicht zu montieren und demontieren ist.

## Beschreibung

Die vorliegende Erfindung betrifft einen Möbelkorpus mit zwei beabstandet angeordneten Seitenwänden, an denen eine Rückwand festgelegt ist, wobei die Seitenwände als Leichtbauplatte mit zwei äußeren Deckplatten und einer Zwischenlage ausgebildet sind.

Die DE 22 31 577 offenbart einen Möbelkorpus im rückseitigen Bereich, bei der die Rückwandteile über einen Beschlag mit einer Möbelseitenwand verbunden sind. Der Beschlag weist dabei einen gabelartigen Querschnitt auf, um die Kontur der Rückwand randseitig zu umfassen. Die Beschlagsteile werden dabei über einen Dübel mit den Seitenwänden verbunden. Solche Beschläge eignen sich aber schlecht für die Befestigung an Seitenwänden in Leichtbauweise, da die Dübel gerade im mittleren Bereich einer Leichtbauplatte nicht gut festlegbar sind.

Die WO 2007/131903 zeigt die Verbindung einer Leichtbauplatte mit einer Rückwand eines Möbels, wobei an der Leichtbauplatte eine Leiste festgelegt ist, an der ein U-förmiger Aufnahmekanal vorgesehen ist, um den Rand der Rückwand daran aufzunehmen. Die Montage einer solchen Verbindung zwischen einer Leichtbauplatte und einer Rückwand ist allerdings vergleichsweise aufwendig, insbesondere lässt sich die Rückwand nicht von allen Seiten in den Aufnahmekanal einschieben.

Es ist daher Aufgabe der vorliegenden Erfindung einen Möbelkorpus zu schaffen, bei dem eine Rückwand auf einfache Weise an Seitenwänden festlegbar ist, die als Leichtbauplatten ausgebildet sind.

Diese Aufgabe wird mit einem Möbelkorpus mit den Merkmalen des Anspruches 1 gelöst.

Erfindungsgemäß sind in einer inneren Deckplatte jeder Seitenwand Öffnungen vorgesehen, in die jeweils ein sich aufweitendes Klemmelement zum Festlegen der Rückwand eingefügt ist. Dadurch braucht die Rückwand lediglich an den Seitenwänden positioniert zu werden, wobei die Festlegung dann durch Einschieben oder Einschlagen der Klemmelemente erfolgt. Dies führt zu einer einfachen Montage, wobei die Rückwand an den Seitenwänden bei Bedarf auch wieder demontiert werden kann.

Gemäß einer bevorzugten Ausgestaltung der Erfindung greift das Klemmelement mit einem vorderen Abschnitt in die Zwischenlage der Seitenwand ein und hintergreift mit einem hinteren Abschnitt die Rückwand an ihrer Rückseite. Dadurch kann das Klemmelement mit gewissen Toleranzen hergestellt sein, ohne dass die Funktion beeinträchtigt wird. Denn es ist zur Festlegung der Rückwand nicht entscheidend, ob das Klemmelement etwas tiefer in die Zwischenlage eingreift oder stärker von der Deckplatte hervorsteht. Es ist lediglich wichtig, dass die Rückwand an der Rückseite nicht vom Möbelkorpus entfernt werden kann.

Dabei ist das Klemmelement vorzugsweise an der Rückwand fixiert ist, beispielsweise über weitere Befestigungsmittel. Es ist auch möglich, das mindestens eine Klemmelement integral mit der Rückwand auszubilden.

Für eine einfache Festlegung der Deckplatte mit vergleichsweise wenigen Bauteilen ist es vorteilhaft, wenn an der inneren Deckplatte jeder Seitenwand eine leistenförmige Aussparung vorgesehen ist, die eine Anlagefläche für die Rückwand ausbildet. Dadurch können an der Vorderseite der Rückwand die Anlageflächen an der Deckplatte genutzt werden und es sind keine zusätzlichen Halteelemente erforderlich.

Für eine stabile Festlegung der Klemmelemente können diese keilförmig ausgebildet sein, wobei die keilförmigen Klemmelemente in rechteckige Öffnungen eingreifen. Es ist auch möglich, die Öffnungen kreisförmig und die Klemmelemente kegelförmig auszubilden. Auch andere Geometrien sind denkbar.

Die Erfindung wird nachfolgend anhand eines Ausführungsbeispieles mit Bezug auf die beigefügten Zeichnungen näher erläutert. Es zeigt:

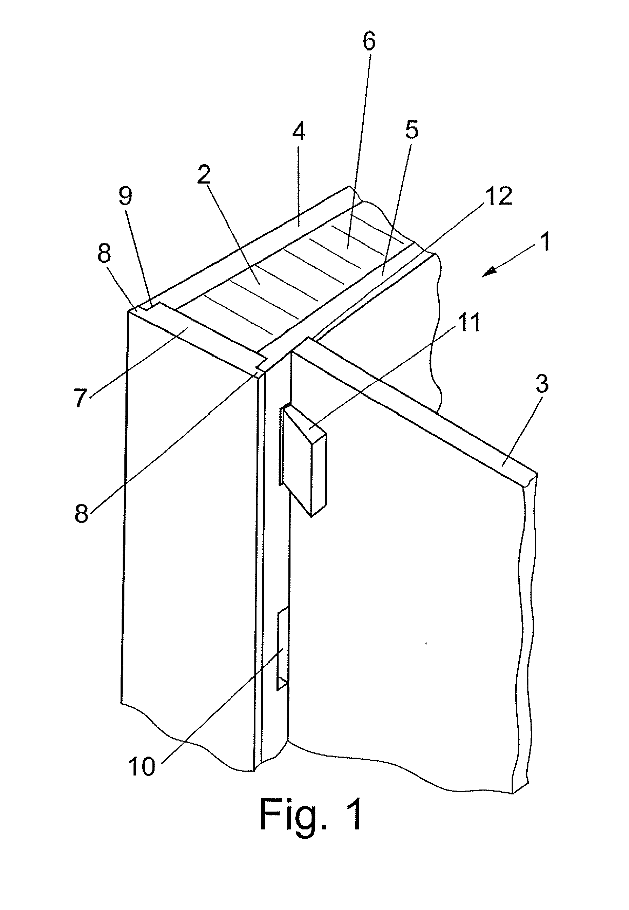

- Figur 1: eine perspektivische Ansicht eines rückseitigen Bereiches eines erfindungsgemäßen Möbelkorpus, und

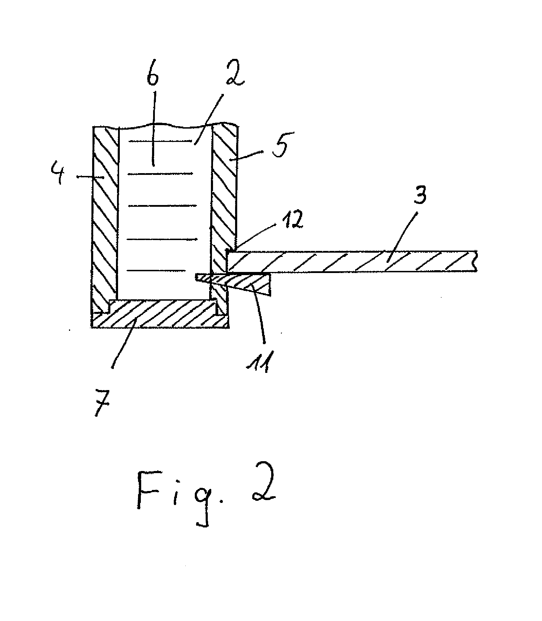

- Figur 2: eine geschnittene Detailansicht des Möbelkorpus der Figur 1.

Ein Möbelkorpus 1 ist als Kastenmöbel oder Regal ausgebildet und umfasst mindestens zwei beabstandete Seitenwände 2, die über eine Rückwand 3 miteinander verbunden sind. Ferner kann auch eine Bodenwand und eine obere Deckwand vorgesehen sein. Die Seitenwände 2 sind jeweils als Leichtbauplatten ausgebildet und umfassen äußere Deckplatten 4 und 5 aus Pappe oder einem Holzfaserwerkstoff. Zwischen den Deckplatten 4 und 5 ist eine Zwischenlage 6 angeordnet, die Hohlräume aufweist und beispielsweise als Wabenplatte ausgebildet ist. Die Zwischenlage 6 kann ebenfalls aus Pappe oder Kunststoff hergestellt sein. Die Leichtbauplatte besitzt dadurch ein großes Volumen aber geringes Eigengewicht.

An einer Schmalseite ist die Seitenwand 2 über eine Leiste 7 verschlossen, die randseitig hervorstehende dünne Endabschnitte 8 aufweist und einen dickeren Mittelabschnitt hat. Dadurch ist eine Stufe 9 gebildet, die jeweils im Bereich einer Deckplatte 4 und 5 angeordnet und dort verklebt ist.

Zum Festlegen der Rückwand 3 an einer Seitenwand 2 sind in der inneren Deckplatte 5 mehrere rechteckförmige Öffnungen 10 vorgesehen, die in regelmäßigen Abständen angeordnet sein können. In zumindest einige der Öffnungen 10 sind Klemmelemente 11 eingefügt, die in dem dargestellten Ausführungsbeispiel keilförmig sind und mit einer vorderen Spitze in die leicht zusammendrückbare Zwischenlage 6 eingefügt sind. Durch die keilförmige Ausbildung des Klemmelementes 11 kann dieses klemmend in der Öffnung 10 der inneren Deckplatte 5 festgelegt werden. Ein Teil des Klemmelementes 11 steht von der Deckplatte 5 nach innen hervor und hintergreift die Rückwand 3 an ihrer Rückseite. Die Rückwand 3 ist dabei an einer Vorderseite randseitig an einem Anschlag 12 gehalten, der durch eine Aussparung an der inneren Deckplatte 5 gebildet ist. Dadurch kann die Rückwand 3 nicht nach vorne hin bewegt werden und ist rückseitig durch ein oder mehrere Klemmelemente 11 gehalten und somit sicher positioniert.

Im dargestellten Ausführungsbeispiel sind die Öffnungen 10 rechteckförmig und die Klemmelemente 11 keilförmig ausgebildet. Es ist natürlich auch möglich, kreisförmige Öffnungen vorzusehen, die von einem kegelförmigen Klemmelement ausgefüllt werden.

Die Klemmelemente 11 können aus Holz, Kunststoff oder einem anderen geeigneten Material hergestellt sein.

Die Klemmelemente 11 können ebenso an Boden und Deckwand festgelegt werden. Denkbar wäre auch die Rückwand mit den Klemmelementen zu verbinden, z.B. Kleben, Schrauben. In diesem Fall kann man dann auf den Anschlag 12 verzichten.

## Patentansprüche

1. Möbelkorpus mit zwei beabstandet angeordneten Seitenwänden (2), an denen eine Rückwand (3) festgelegt ist, wobei die Seitenwände (2) als Leichtbauplatten mit äußeren Deckplatten (4, 5) und einer Zwischenlage (6) ausgebildet sind, **dadurch gekennzeichnet, dass** in einer inneren Deckplatte (5) jeder Seitenwand (2) Öffnungen (10) vorgesehen sind, in die jeweils ein sich aufweitendes Klemmelement (11) zum Festlegen der Rückwand (3) eingefügt ist.

2. Möbelkorpus nach Anspruch 1, **dadurch gekennzeichnet, dass** das Klemmelement (11) mit einem vorderen Abschnitt in die Zwischenlage (6) der Seitenwand (2) eingreift und mit einem hinteren Abschnitt die Rückwand (3) rückseitig hintergreift.

3. Möbelkorpus nach Anspruch 1 oder 2, **dadurch gekennzeichnet, dass** das Klemmelement (11) an der Rückwand (3) fixiert ist.

4. Möbelkorpus nach einem der Ansprüche 1 bis 3, **dadurch gekennzeichnet, dass** an der inneren Deckplatte (5) jeder Seitenwand (2) eine leistenförmige Aussparung (12) vorgesehen ist, die eine Anlagefläche für die Rückwand (3) ausbildet.

5. Möbelkorpus nach einem der Ansprüche 1 bis 4, **dadurch gekennzeichnet, dass** die Öffnungen (10) rechteckig und die Klemmelemente (11) keilförmig ausgebildet sind.

6. Möbelkorpus nach einem der Ansprüche 1 bis 4, **dadurch gekennzeichnet, dass** die Öffnungen kreisförmige und die Klemmelemente kegelförmig ausgebildet sind.
